# EUROPEAN PATENT APPLICATION

(11) **EP 4 660 070 A1**
(43) Date of publication of application: **10.12.2025**
(21) Application number: 24179770.3
(22) Date of filing: 04.06.2024
(51) Int. Cl.: B63B 39/02, F16C 32/04, H02K 41/03

(54) **ELECTRIC STABILIZER**

(71) Applicant: GE Energy Power Conversion Technology Limited, Rugby, Warwickshire CV21 1BD (GB)
(72) Inventor: MELOT, Julien, 54250 CHAMPIGNEULLES (FR); BIRI, Clément, 54250 CHAMPIGNEULLES (FR); DURANTAY, Lionel, 54250 CHAMPIGNEULLES (FR); JULLIAND, Lionel, 90000 BELFORT (FR); SELLALI, Mahdi, 54250 CHAMPIGNEULLES (FR)
(74) Representative: Casalonga

(57) **Abstract**

Electric stabilizer (1) comprising a track (2) for guiding a mobile stabilizing mass (3) along a track direction, at least one linear motor (6, 7) comprising a planar stator (8, 12) that extends along the track (2), and a planar rotor (9, 13) that is adapted to move forwards and backwards along the track (2) with the mobile stabilizing mass (3), the stator (8, 12) comprising a polyphase stator winding (10, 14) and the rotor (9, 13) comprising a plurality of permanent motor magnets (11, 15) facing the polyphase stator winding (10, 14) that define a plurality of rotor poles of alternating polarity along the track direction.

The electric stabilizer (1) comprises at least one line of electromagnets (21, 22) for selectively attracting the mobile stabilizing mass (3) in a direction away from the track (2), and at least one stop (29, 30) for limiting the movement of the mobile stabilizing mass (3) towards the electromagnets (21, 22).

## Description

### Technical Field

The present invention relates to electric stabilizers, and in particular to electric stabilizers for stabilizing a floating structure.

The term "floating structure" is intended to cover any structure that floats and that requires stabilizing in use such as *inter alia* civilian or military marine vessels, floating platforms or oil storage facilities, floating electric generators, offshore wind turbines, or other.

### Background Art

Stabilizers can be used on floating structures such as marine vessels to reduce pitch and/or roll in rough seas and help maintain speed while reducing fuel consumption.

As used herein, "pitch" refers to the up and down movement of the bow and stern of the marine vessel, or rotation about its transverse or port starboard axis, and "roll" refers to the side to side movement of the marine vessel, or rotation about its longitudinal or bow stern axis. In more general terms, "pitch" and "roll" may refer to rotation about any two perpendicular axes of the floating structure.

Known stabilizers for marine vessels and other floating structures include passive and active ballasts, passive bilge keels, active fins, active gyroscopes, mechanical linear systems, optionally including electric dampers, and moving mass systems, which may be electrically controlled.

For example, EP 4 292 918 A1 patent application discloses a moving mass system that may include at least one plane linear electric motor structured as follows: a stator is secured to a base and a rotor is a mobile mass guided relative to the stator. The rotor is subjected to electromagnetic levitation by means of active magnetic bearings, and subjected to movements relative to the stator by the action of a motor area. Each of the active magnetic bearings includes electromagnets secured to the stator and permanent magnets secured to the rotor. Electromagnetic levitation of the rotor works both with said electromagnets and said permanent magnets, and the rotor is immobilized when the electromagnets are not powered. The movements of the rotor are obtained with the action of other electromagnets of the stator and other permanent magnets of the rotor in the motor area. Dynamic positioning of the rotor is obtained with great precision. The motor has a high torque. The electrically controlled system according to EP 4 292 918 A1 has advantages such as compactness and unparalleled response time. The frictions between the mobile and fixed parts are very low. The vibrations and emitted noises are very low. The mass of the system can be adapted by selecting an appropriate number of subassemblies secured to each other. The constituent elements of the system are easy to find commercially or easy to manufacture. The system requires little maintenance. Through its performances, the system allows the removal of the ship's stabilizing fins.

In summary, a moving mass system including a plane linear electric motor is advantageous for stabilizing a floating structure.

Nevertheless, in particular considering certain conditions of intense use, some points deserve improvement.

In particular, the air gaps between the electromagnets and the permanent magnets of the active magnetic bearings may be unstable, said air gaps fluctuating even if a constant value is programmed. This makes other air gaps in the motor area, between the electromagnets of the stator and the permanent magnets of the rotor, also unstable. Controlling the air gaps between said stator and said rotor may be difficult because the implementation of electromagnetic levitation may be complicated. Accordingly, parasitic mechanical moments may be exerted on the mobile mass, depending on the loads and mechanical inertia, and overconsumptions of electrical energy can occur due to air gaps variations.

Besides, a high average current consumption of the system may be observed for a limited levitation force, due to the fact that the electromagnets of the active magnetic bearings, which allow the levitation of the rotor, act on the flows of permanent magnets of said rotor, said permanent magnets attracting the rotor towards the stator to improve a braking effect when the electromagnets are not active. More precisely, the magnetic flux created by the electromagnets of an active magnetic bearing pass through permanent magnets in a direction opposite to the magnetic flux present in said permanent magnets. Each electromagnet acts against the action of permanent magnets to cancel the braking effect and obtain levitation of the mobile mass. In so doing, the consumption of electrical energy is significant.

The control of the rotor is delicate in the case of levitation because the moving mass system is installed in a moving frame subject to random external accelerations.

At last, a decrease of functional abilities may be observed, due to the action of the electromagnets of each active magnetic bearing, leading to a risk of loss of the magnetic force of the permanent magnets, which would reduce the levitation ability of the rotor, and the braking effect of said rotor.

### Summary of the invention

One aim of the present invention is to alleviate or overcome the aforementioned drawbacks and has the general goal of improving an electric stabilizer. One goal of the invention is in particular to better control the air gaps between the stator and the rotor of an electric motor of the stabilizer to improve the stability of the rotor. Another goal is to reduce the average current consumption of the stabilization system. A further goal is to improve reliability and to reduce maintenance costs.

According to the invention, an electric stabilizer comprises a track for guiding a mobile stabilizing mass along a track direction, at least one linear motor comprising a planar stator that extends along the track (i.e. in the track direction), and a planar rotor that is adapted to move forwards and backwards along the track with the mobile stabilizing mass, the stator comprising a polyphase stator winding and the rotor comprising a plurality of permanent motor magnets facing the polyphase stator winding that define a plurality of rotor poles of alternating polarity (i.e. north and south polarity) along the track direction. The electric stabilizer comprises at least one line of electromagnets for selectively attracting the mobile stabilizing mass in a direction away from the track (i.e. perpendicular to the track), and at least one stop for limiting the movement of the mobile stabilizing mass towards the electromagnets.

When a sufficient number of electromagnets are electrically powered, the mobile stabilizing mass may come into contact with each stop. Therefore, each air gap between a stator and a rotor maintains a nominal value, which is a stable value linked to the dimensions of the constituent parts of the stabilizer. Each air gap between a stator and a rotor may thus be stable. The geometry of the air gaps may be constant and precise. The force of attraction of each electromagnet may be adjusted to limit the mechanical forces linked to contact of the mobile stabilizing mass on each stop. This makes the operation of the stabilizer regular and stable. One resulting advantage is the absence of parasitic mechanical loads and moments both on the mobile stabilizing mass and on each stop. Another resulting advantage is a reasonable consumption of electrical energy.

In addition, each electromagnet may attract the mobile stabilizing mass in a direction away from the track, such that a modest force of attraction is sufficient, which results in a limited consumption of electrical energy of the stabilizer.

A further point is the simplicity of the stabilizer structure, the constituents of the latter retaining their properties and functional abilities over time. This helps improving reliability. This advantageously results in maintenance conditions being simpler and more economical.

Preferably, the track is delimited by a first rail and a second rail parallel to each other, the mobile stabilizing mass tacking place between the rails, the mobile stabilizing mass having the general shape of a plate extending in length between a first end and a second end, in width between a first surface and a second surface, and in thickness between a lower face and an upper face, a first stop being a first tab projecting from the first rail to extend into a first groove of the first surface of the mobile stabilizing mass, and a second stop being a second tab projecting from the second rail to extend into a second groove of the second surface of the mobile stabilizing mass.

Advantageously, the length of the mobile stabilizing mass is maximum 11 meters, the width of the mobile stabilizing mass is maximum 8 meters and the thickness of the mobile stabilizing mass is maximum 1 meter.

Preferably, the first tab and the second tab are each parallel to the lower face of the mobile stabilizing mass.

Preferably, the first tab has a lower face and the second tab has a lower face.

Advantageously, the lower face of the first tab has a first low coefficient of friction, and lower face of the second tab has a second low coefficient of friction, the first low coefficient of friction and the second low coefficient of friction being between 0.05 and 0.1.

Preferably, the center of gravity of the mobile stabilizing mass, the contact surface between the lower face of the first tab and the first groove, and the contact surface between the lower face of the second tab and the second groove are in a same plan.

Preferably, a first line of electromagnets is located above the mobile stabilizing mass near the first rail, and a second line of electromagnets is located above the mobile stabilizing mass near the second rail.

Advantageously, for each of the first and second lines of electromagnets, the air gap is more than 8 mm when the first and second lines of electromagnets are not powered and less than 8 mm when the first and second lines of electromagnets are powered.

Preferably, a first linear motor is located in the middle and at the bottom of the plate, and a second linear motor is located in the middle and at the top of the plate.

Advantageously, the mobile stabilizing mass has a lower longitudinal groove in which the first motor is placed, and an upper longitudinal edge on which the second motor is placed.

Preferably, the air gap of the first motor is less or equal than 8 mm when the first and second lines of electromagnets are not powered and more or equal than 8 mm when the first and second lines of electromagnets are powered, and the air gap of the second motor is more or equal than 8 mm when the first and second lines of electromagnets are not powered and less or equal than 8 when the first and second lines of electromagnets are powered.

The difference between the air gaps of the first and the second motors is between 3 and 7 mm.

Each linear motor is direct current.

The mobile stabilizing mass is provided with friction pads.

A first line of friction pads is located under the mobile stabilizing mass near the first rail, and a second line of friction pads is located under the mobile stabilizing mass near the second rail.

The mobile stabilizing mass is made of a material with high magnetic permeability.

The invention also relates to a floating structure equipped with an electrical stabilizer as mentioned before.

### Drawings

Other aims, characteristics and advantages of the invention will appear on reading the following description, given solely by way of a non-limiting example and made with reference to the appended drawings in which :
- Figure 1 is a cross section of an electric stabilizer according to the example proposed for carrying out the invention,
- Figure 2 is a perspective view of a mobile stabilizing mass of the electric stabilizer of [Fig. 1],
- Figure 3 is a perspective view of the parts which allow the guiding of the mobile stabilizing mass of the stabilizer of [Fig. 1],
- Figure 4 is a partial view of [Fig. 1], showing an electromagnet in a case where the electric stabilizer is at rest,
- Figure 5 is a partial view of [Fig. 1], showing part of a first motor and part of a second motor in a case where the electric stabilizer is at rest,
- Figure 6 is similar to [Fig. 1], in a case where the electric stabilizer is at rest,
- Figure 7 is similar to [Fig. 4], in a case where the electric stabilizer is in action,
- Figure 8 is similar to [Fig. 5], in a case where the electric stabilizer is in action,
- Figure 9 is similar to [Fig. 6], in a case where the electric stabilizer is in action,
- Figure 10 is a diagram describing the rolling of a ship by the action of the swell,
- Figure 11 is a perspective view of the electric stabilizer according to [Fig. 1],
- Figure 12 is a diagram describing movements of the mobile stabilizing mass of the electric stabilizer.

### Detailed description

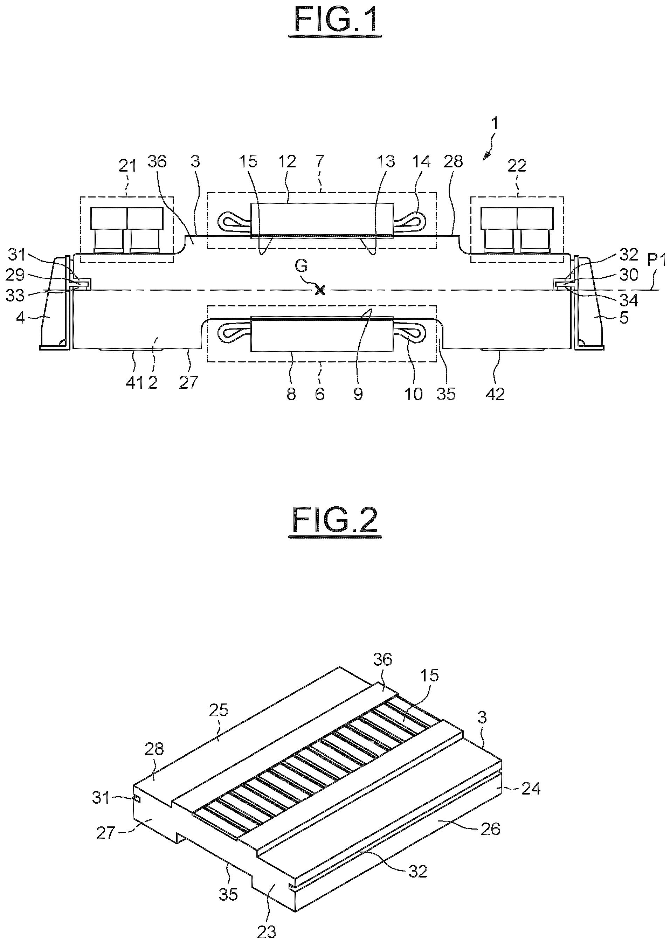

With reference to Figures 1, 2, 3, an electric stabilizer 1 comprises a track 2 for guiding a mobile stabilizing mass 3 along a track direction. The track 2 is delimited by a first rail 4 and a second rail 5 parallel to each other. In a non-limiting manner, each rail 4, 5 has the general shape of a square.

The electric stabilizer 1 comprises a first linear motor 6 and a second linear motor 7 that extend along the track 2. The first linear motor 6 comprises a planar stator 8 that extends along the track 2, and a planar rotor 9 that is adapted to move forwards and backwards along the track 2 with the mobile stabilizing mass 3. The stator 8 comprises a polyphase stator winding 10, and the rotor 9 comprises a plurality of permanent motor magnets 11 facing the polyphase stator winding 10 that define a plurality of rotor poles of alternating polarity along the track direction. In the same way, the second linear motor 7 comprises a planar stator 12 that extends along the track 2, and a planar rotor 13 that is adapted to move forwards and backwards along the track 2 with the mobile stabilizing mass 3. The stator 12 comprises a polyphase stator winding 14, and the rotor 13 comprises a plurality of permanent motor magnets 15 facing the polyphase stator winding 14 that define a plurality of rotor poles of alternating polarity along the track direction.

The electric stabilizer 1 comprises a first line of electromagnets 21 located above the mobile stabilizing mass 3 near the first rail 4, and a second line of electromagnets 22 located above the mobile stabilizing mass 3 near the second rail 5, for selectively attracting the mobile stabilizing mass 3 in a direction away from the track 2. The mobile stabilizing mass 3, taking place between the rails 4, 5, has the general shape of a plate extending in length between a first end 23 and a second end 24, in width between a first face 25 and a second face 26, and in thickness between a lower face 27 and an upper face 28.

The length of the mobile stabilizing mass 3 may be maximum 11 meters, the width of the mobile stabilizing mass 3 may be maximum 8 meters and the thickness of the mobile stabilizing mass 3 may be maximum 1 meter.

For limiting the movements of the mobile stabilizing mass 3 towards the electromagnets 21, 22, the stabilizer 1 comprises a first stop 29 and a second stop 30. In a non-limiting manner, the first stop 29 is a first tab projecting from the first rail 4 to extend into a first groove 31 of the first surface 25 of the mobile stabilizing mass 3, and the second stop 30 is a second tab projecting from the second rail 5 to extend into a second groove 32 of the second surface 26 of the mobile stabilizing mass 3. The first tab 29 has a lower face 33 with a first low coefficient of friction, and the second tab 30 has a lower face 34 with a second low coefficient of friction. The first low coefficient of friction and the second low coefficient of friction are between 0.05 and 0.1.

The center of gravity G of the mobile stabilizing mass 3, the contact surface between the lower face 33 of the first tab 29 and the first groove 31, and the contact surface between the lower face 34 of the second tab 30 and the second groove 32 may be in a same plan P1.

The arrangement of the center of gravity G of the mobile stabilizing mass 3 in the same plan P1 as the contact surface between the lower face 33 of the first tab 29 and the first groove 31, and the contact surface between the lower face 34 of the second tab 30 and the second groove 32 permits to reduce tipping moments generated by inertia forces on the mobile stabilizing mass.

In order to facilitate the installation of the motors 6, 7 and the lines of electromagnets 21, 22, the mobile stabilizing mass 3 has a lower longitudinal groove 35 in which the first motor 6 is placed, and an upper longitudinal edge 36 on which the second motor 7 is placed.

In order to immobilize the mobile stabilizing mass 3 when the lines of electromagnets 21, 22 are not powered, a first line of friction pads 41 is located under the mobile stabilizing mass 3 near the first rail 4, and a second line of friction pads 42 is located under the mobile stabilizing mass 3 near the second rail 5.

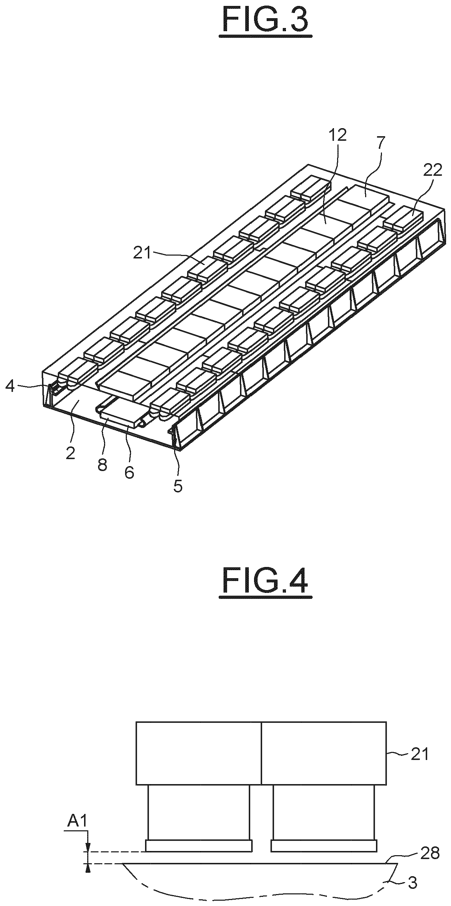

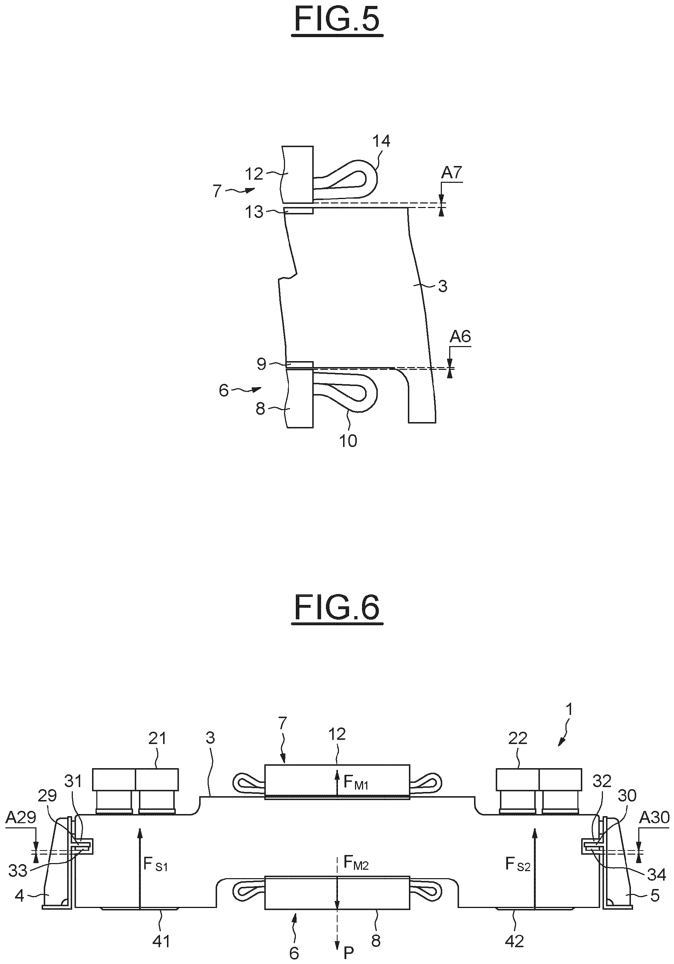

The stabilizer 1 rest situation is presented in Figures 4, 5, 6.

The lines of electromagnets 21, 22 are not powered in the stabilizer 1 rest situation.

In rest, the air gap A1 between the mobile stabilizing mass 3 and each line of electromagnets 21, 22, the air gap A6 of the first linear motor 6, between the planar stator 8 and the planar rotor 9, and the air gap A7 of the second linear motor 7, between the planar stator 12 and the planar rotor 13 may vary between 0.5 mm and 25 mm, for example between 1 to 15 mm, more preferably between 5 and 10 mm.

In rest, the air gap A6 and the air gap A7 may different, for example the air gap A6 is equal to a ratio between 1/3 and 2/3 of the air gap A7, the air gap A7variying for example between 5 mm and 10 mm.

In operation, when the first line of electromagnets 21 and the second line of electromagnets 22 attract the mobile stabilizing mass 3, the air gap A6 and the air gap A7 may be identical to simplify the control of the electromagnets 21, 22, for example 7.5 mm in operation, or may be different.

At rest, the air gap A6 is smaller than the air gap A7. The magnetic force F_{M2} exerted downwards by the motor 6 is stronger than the magnetic force F_{M1} exerted upwards by the motor 7. The difference between F_{M2} and F_{M1} creates a downward force which is added to the weight P to force the mobile stabilizing mass 3 downwards. The result is balanced by the reactions Fsi and F_{S2} of lines 41, 42 of friction pads. In correlation, mechanical clearances A29 and A30, respectively between the lower faces 33, 34 of the stops 29, 30 and the grooves 31, 32, have values of several millimeters, for example at least 3.

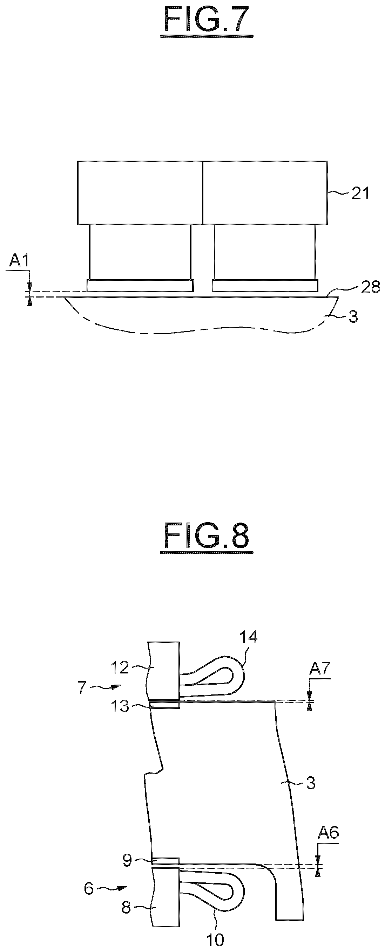

A situation of the stabilizer 1 in working position is presented by Figures 7, 8, 9.

In working position, the lines of electromagnets 21, 22 are powered.

The air gaps A1 between the mobile stabilizing mass 3 and each line of electromagnets 21, 22 are for example less or equal to 8 mm. The air gaps A6 of the first linear motor 6, between the planar stator 8 and the planar rotor 9, are for example equal to or more than 8 mm. And the air gaps A7 of the second linear motor 7, between the planar stator 12 and the planar rotor 13, are for example less or equal to 8 mm. In working position the air gap A6 is bigger than the air gap A7. The magnetic force F_{M2} exerted downwards by the motor 6 is lower than the magnetic force F_{M1} exerted upwards by the motor 7. The difference between F_{M2} and F_{M1} creates an upward force which is opposite to the weight P. Further, forces Fg1 and Fg2 from the stops 29, 30 on the mobile stabilizing mass 3 are added to the forces mentioned above to balance the magnetic forces F_{E1}, F_{E2} of the electromagnets 21, 22. In correlation, mechanical clearances A29 and A30, respectively between the lower faces 33, 34 of the stops 29, 30 and the grooves 31, 32, have values equal to zero.

Because the lower faces 33, 34 of the stops 29, 30 have first and second low coefficients of friction, the driving forces F_{ML1}, F_{ML2} of the motors 6, 7 can move the mobile stabilizing mass along the track 2.

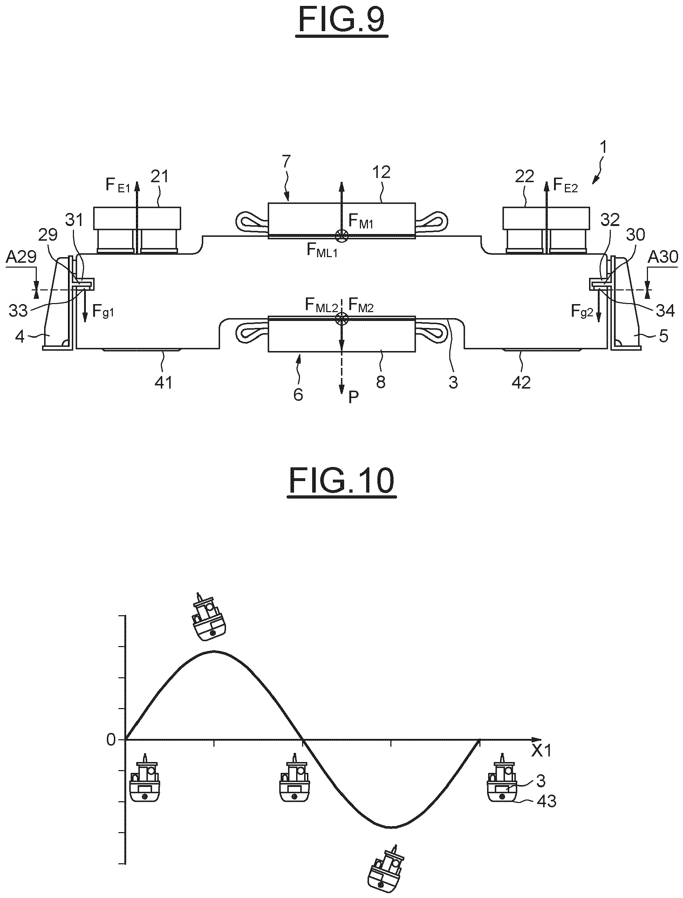

The effects produced by the stabilizer are presented using Figures 10, 11, 12.

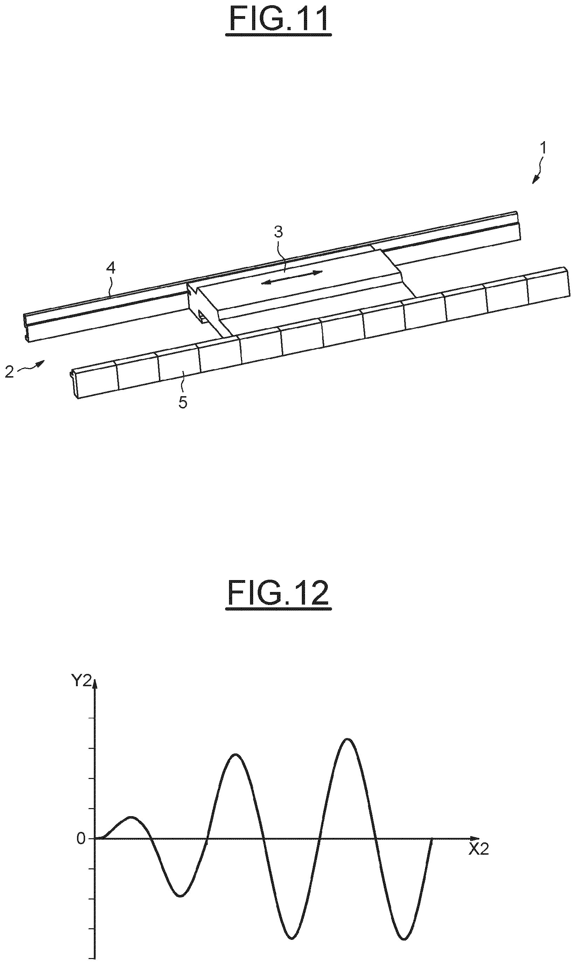

A diagram describing the rolling of a ship 43 by the action of the swell is shown in Figure 10. Time appears in seconds on the x-axis X1, and amplitude appears on the y-axis Y1. Non-limitatively, a swell cycle here is approximately 9 seconds. The mobile stabilizing mass 3 moves in a transverse direction to counterbalance the inclinations of the ship 43 caused by the swell. For example, as shown in Figure 11, the length of the rails 4, 5 is for example approximately three times greater than that of the mobile stabilizing mass 3.

An example of variation in amplitude of movements of the mobile stabilizing mass 3 along the rails 4, 5 is given in Figure 12. The abscissa axis X2 is that of time, and the ordinate axis Y2 is that of the amplitude of the movements of the mobile stabilizing mass 3. From one period of 9 seconds to the next, the amplitude of the movements of the mobile stabilizing mass 3 increases, until the appropriate compensation.

The invention is not limited to the implementation described and includes all the equivalents which may fall within the scope of the following claims.

In particular, various systems can be provided for the management of the motors, either by powering them, or by using them as generators which recover the energy provided by the swell. Contrary to a moving mass system, the electric stabilizer 1 does not comprise a mass in levitation, the mobile stabilizing mass 3 being guided with the first and second stops 29, 30 ensuring a simplified control of the mobile stabilizing mass 3 and the airgaps.

## Claims

1. Electric stabilizer (1) comprising a track (2) for guiding a mobile stabilizing mass (3) along a track direction, at least one linear motor (6, 7) comprising a planar stator (8, 12) that extends along the track (2), and a planar rotor (9, 13) that is adapted to move forwards and backwards along the track (2) with the mobile stabilizing mass (3), the stator (8, 12) comprising a polyphase stator winding (10, 14) and the rotor (9, 13) comprising a plurality of permanent motor magnets (11, 15) facing the polyphase stator winding (10, 14) that define a plurality of rotor poles of alternating polarity along the track direction, wherein the electric stabilizer (1) comprises at least one line of electromagnets (21, 22) for selectively attracting the mobile stabilizing mass (3) in a direction away from the track (2), and at least one stop (29, 30) for limiting the movement of the mobile stabilizing mass (3) towards the electromagnets (21, 22).

2. Electric stabilizer (1) according to claim 1, wherein the track (2) is delimited by a first rail (4) and a second rail (5) parallel to each other, the mobile stabilizing mass (3) taking place between the rails (4, 5), the mobile stabilizing mass (3) having the general shape of a plate extending in length between a first end (23) and a second end (24), in width between a first surface (25) and a second surface (26), and in thickness between a lower face (27) and an upper face (28), a first stop (29) being a first tab projecting from the first rail (4) to extend into a first groove (31) of the first surface (25) of the mobile stabilizing mass (3), and a second stop (30) being a second tab projecting from the second rail (5) to extend into a second groove (32) of the second surface (26) of the mobile stabilizing mass (3).

3. Electrical stabilizer (1) according to claim 2, wherein the length of the mobile stabilizing mass (3) is maximum 11 meters, the width of the mobile stabilizing mass (3) is maximum 8 meters and the thickness of the mobile stabilizing mass (3) is maximum 1 meter.

4. Electric stabilizer (1) according to claim 2 or 3, wherein the first tab (29) and the second tab (30) are each parallel to the lower face (27) of the mobile stabilizing mass (3).

5. Electric stabilizer (1) according to any one of claims 2 to 4, wherein the first tab (29) has a lower face (33) and the second tab (30) has a lower face (34).

6. Electric stabilizer (1) according to claim 5, wherein the lower face (33) of the first tab (29) has a first low coefficient of friction, and the lower face (34) of the second tab (30) has a second low coefficient of friction, the first low coefficient of friction and the second low coefficient of friction being between 0.05 and 0.1.

7. Electric stabilizer (1) according to claim 5 or 6, wherein the center of gravity (G) of the mobile stabilizing mass (3), the contact surface between the lower face (33) of the first tab (29) and the first groove (31), and the contact surface between the lower face (34) of the second tab (30) and the second groove (32) are in a same plan (P1).

8. Electric stabilizer (1) according to any of claims 1 to 7, wherein a first line of electromagnets (21) is located above the mobile stabilizing mass (3) near the first rail (4), and a second line of electromagnets (22) is located above the mobile stabilizing mass (3) near the second rail (5).

9. Electric stabilizer (1) according to claim 8, wherein, for each of the first (21) and second (22) lines of electromagnets, the air gap (A1) is more than 8 mm when the first (21) and second (22) lines of electromagnets are not powered and less than 8 mm when the first (21) and second (22) lines of electromagnets are powered.

10. Electric stabilizer (1) according to any of claims 2 to 9, wherein a first linear motor (6) is located in the middle and at the bottom of the plate (3), and a second linear motor (7) is located in the middle and at the top of the plate (3).

11. Electric stabilizer (1) according to claim 10, wherein the mobile stabilizing mass (3) has a lower longitudinal groove (35) in which the first motor (6) is placed, and an upper longitudinal edge (36) on which the second motor (7) is placed.

12. Electric stabilizer (1) according to claim 10 or 11, wherein the air gap (A6) of the first motor (6) is less or equal than 8 mm when the first (21) and second (22) lines of electromagnets are not powered and more or equal than 8 mm when the first (21) and second (22) lines of electromagnets are powered, and the air gap (A7) of the second motor (7) is more or equal than 8 mm when the first (21) and second (22) lines of electromagnets are not powered and less or equal than 8 mm when the first (21) and second (22) lines of electromagnets are powered.

13. Electric stabilizer (1) according to any of claims 10 to 12, wherein the difference between the air gaps (A6, A7) of the first motor (6) and the second motor (7) is between 3 and 7 mm.

14. Electric stabilizer (1) according to any of claims 1 to 13, wherein each linear motor (6, 7) is direct current.

15. Electric stabilizer (1) according to any of claims 1 to 14, wherein the mobile stabilizing mass (3) is provided with friction pads (41, 42).

16. Electric stabilizer (1) according to claim 15, wherein a first line of friction pads (41) is located under the mobile stabilizing mass (3) near the first rail (4), and a second line of friction pads (42) is located under the mobile stabilizing mass (3) near the second rail (5).

17. Electric stabilizer (1) according to any of claims 1 to 16, wherein the mobile stabilizing mass (3) is made of a material with high magnetic permeability.
